# EUROPEAN PATENT APPLICATION

(11) **EP 4 596 269 A1**
(43) Date of publication of application: **06.08.2025**
(21) Application number: 24155552.3
(22) Date of filing: 02.02.2024
(51) Int. Cl.: B60G 17/052

(54) **CABIN LEVELLING VALVE AND SYSTEM, COMMERCIAL VEHICLE, METHOD OF ASSEMBLING A CABIN LEVELLING VALVE, AND USE OF A CABIN LEVELLING VALVE**

(71) Applicant: ZF CV Systems Europe BV, 1170 Brüssel (BE)
(72) Inventor: REPELA, Marek, 53238 Wroclaw (PL)
(74) Representative: Ohlendorf, Henrike

(57) **Abstract**

A cabin levelling valve (10) comprises a control member, a body (11), a cover attached to the body (11), a gasket mounted between the body (11) and the cover, a supply port, a discharge port, and at least one exhaust port (20). The at least one exhaust port (20) comprises a sealing member (22) configured to reduce or prevent ingress of foreign material into the cabin levelling valve (10). The at least one exhaust port (20) further comprises a mounting member (23) affixed to the body (11) or the cover to secure the sealing member (22) to the body (11) or the cover.

## Description

The invention relates to pneumatic system components configured for installation on a commercial vehicle. The invention relates in particular to a cabin levelling valve that is controllable to selectively inflate an air bag or discharge gas from an air bag to perform a cabin levelling operation. The invention also relates to a cabin levelling system and commercial vehicle comprising the cabin levelling valve and to methods of assembling and using the cabin levelling valve.

Pneumatic systems are used on vehicles in a wide variety of applications, including pneumatic suspension and levelling. Valves are important components of such suspensions.

EP 3 401 134 A1 and US 2019/0383431 A1 disclose valve configurations suitable for a pneumatic system of a vehicle. Valves such as the valve of EP 3 401 134 A1 may comprise ports for a supply of pressure gas, for discharging the pressure gas to a pneumatic component, and for exhausting the pressure gas.

While it is possible to implement an exhaust port by a gap-shaped opening between outer shell components of the valve, foreign material, namely liquid (such as spray water) and/or dirt (such as particulate matter), might be able to enter the valve. Such contamination of an interior of the valve has the potential to adversely affect valve reliability.

Thus, there is a need for an enhanced cabin levelling valve configured to pass gas from a pressure source to a pneumatic component, in particular an air bag that is inflatable and deflatable to perform raising and lowering operations, for a vehicle cabin, respectively. There is in particular a need for an enhanced cabin levelling valve with good reliability that can be efficiently assembled.

It is an object of the invention to provide an enhanced cabin levelling valve configured to pass gas from a pressure source to a pneumatic component and to exhaust gas from the pneumatic component. It is in particular an object of the invention to provide a cabin levelling valve which reduces or eliminates the risk of foreign material, in particular liquid and/or dirt entering the valve. It is in particular an object of the invention to provide such a cabin levelling valve which can be assembled in an efficient manner.

According to the invention, a cabin levelling valve, a cabin levelling system, a commercial vehicle, an assembly method, and a use as recited in the claims are provided. The dependent claims define preferred or advantageous embodiments.

According to the invention, a cabin levelling valve is provided. The cabin levelling valve comprises a control member, a body, a cover attached to the body, a gasket mounted between the body and the cover, a supply port, a discharge port, and at least one exhaust port. The at least one exhaust port comprises a sealing member configured to reduce or prevent ingress of foreign material into the cabin levelling valve, wherein the at least one exhaust port further comprises a mounting member affixed to the body or the cover to secure the sealing member to the body or the cover. The cabin levelling valve is configured to pass pressure gas received at the supply port to the discharge port for inflation of a pneumatic component to perform a first levelling operation when the control member is in a first position, and exhaust gas received from the pneumatic component at the discharge port through the at least one exhaust port to perform a second levelling operation when the control member is in a second position.

Various effects are attained by the cabin levelling valve. The cabin levelling valve comprises an exhaust port having an ingress-reducing assembly formed by the sealing member to reduce or eliminate undesired ingress of foreign material, such as liquid (e.g., spray water), particulate matter, mud, or other foreign materials in liquid or solid form. By additionally providing the mounting member, the sealing member can be mounted efficiently to the body or the cover. For illustration, the mounting member may be arranged to clamp the sealing member between the mounting member and the body or the cover. This provides the desired ingress protection while affording ease of assembly. Cabin levelling valve life is increased.

The sealing member is configured to be deflected by a pressure differential between an inner cavity of the cabin levelling valve and ambient pressure during the second levelling operation, i.e., when gas is exhausted from the pneumatic component through the exhaust port of the cabin levelling valve. Thus, the desired exhaust port functionality is assured while reducing or eliminating the risk of liquid and/or particulate matter ingress through the exhaust port.

The mounting member may be pushed into engagement with a mounting structure of the body or the housing to secure the sealing member to clamp the sealing member between the mounting member and the body or the cover (in particular an outer surface of the body or of the cover).

This configuration provides the effect that the sealing member can be mounted efficiently while reducing or eliminating the risk of liquid and/or particulate foreign material entering the cabin levelling valve. Cabin levelling valve life is increased.

The mounting structure may comprise a mounting post. The mounting member may comprise an opening through which the mounting post passes through the mounting member.

This configuration provides the effect that the sealing member can be mounted efficiently and retained securely while reducing or eliminating the risk of liquid and/or particulate foreign material entering the cabin levelling valve. Cabin levelling valve life is increased.

The sealing member may comprise a central opening through which the mounting post passes through the sealing member.

This configuration provides the effect that the sealing member is positioned correctly by means of the mounting post with which the mounting member is engaged.

Thereby, the risk of liquid and/or particulate foreign material entering the cabin levelling valve is reduced further.

The mounting member may be engaged with the body or the housing by means of a friction fit.

This configuration provides the effect that the sealing member can be mounted efficiently and retained securely

The mounting member may comprise a clamping ring.

This configuration provides the effect that the clamping ring can be engaged with a mounting post by pushing the clamping ring over the mounting post and into frictional engagement with the mounting post, with the sealing member being clamped between the clamping ring and the body or the cover. Ease of assembly is provided thereby.

The at least one exhaust port may comprise several through openings extending from an inner surface to an outer surface of the body or the cover, wherein the several through openings are in fluid communication with an inner cavity between the body and the cover.

This configuration provides the effect that sections of the outer surface of the body or the cover between the through holes provide structural support for the sealing member, mitigating the risk of the sealing member from being deformed towards the interior of the cabin levelling valve. This further reduces the risk of liquid and/or particulate foreign material entering the cabin levelling valve.

The sealing member may be dimensioned to cover the several through openings on the outer surface of the body or the cover.

This configuration provides ease of assembly of the sealing member from the outer side of the cabin levelling valve.

Each of the several through openings may have a cylindrical surface.

This configuration provides ease of manufacture and attains good gas flow characteristics during the second levelling operation.

The several through openings may be arranged on an arcuate line, such as a circular arc or a circle.

This configuration provides ease of manufacture, because a disc-shaped sealing member having a central opening for a mounting post can be easily positioned to cover all of the several through openings. The mounting post may be arranged centrally between and coaxial with the through openings.

The sealing member may comprise a region biased against a circumferential rim formed on the body or the cover.

This configuration provides the effect that a circumferential contact line of the circumferential rim and the sealing member provides protection against ingress of foreign materials into the cabin levelling valve. Cabin levelling valve lifetime is increased.

The sealing member may have resilient return characteristics that bias the region of the sealing member against the circumferential rim.

This configuration provides ease of assembly. The bias force that biases the sealing member against the circumferential rim of the body or the cover is provided by the sealing member itself. Moreover, this configuration provides the effect that the sealing member is configured to be deflected in a direction away from the body or the cover by a pressure differential during an exhaust operation, allowing gas to be exhausted.

The body or the cover may comprise an accommodation section in which the sealing member and the mounting member are arranged so as to be surrounded by a circumferential wall formed on the body or the cover.

This configuration provides the effect of shielding the sealing member against, e.g., spray water and particulate matter that could otherwise impinge on the sealing member from a lateral direction (i.e., transverse to an axial direction of the mounting post). The risk of foreign material ingress is reduced even further, and cabin levelling valve life is extended even more.

The accommodation section (e.g., a body accommodation section) may be cylindrical, with the sealing member and the mounting member being recessed from an open end of the cylindrical accommodation section.

This configuration provides the effect of reducing the risk of foreign materials impinging onto the sealing member along a direction transverse to the axial direction of the mounting post, while facilitating assembly of a disc-shaped sealing member within the cylindrical accommodation section.

The several through openings may be arranged such that they terminate in an outer surface portion of the body that is perpendicular to a center axis of the cylindrical accommodation section.

This configuration provides the effect of reducing the risk of foreign material ingress into the cabin levelling valve by means of a recessed arrangement of the through openings.

The gasket may be dimensioned to abut on the body and the cover in a close-fitting manner, wherein the gasket is arranged in a recess of the cover into which a raised portion of the body projects.

Thereby, the risk of ingress of liquid(s) and/or particulate matter into the cabin levelling valve is further reduced. Cabin levelling valve life is thereby extended. The provision of one or several exhaust ports allows an exhaust operation to be performed through the cabin levelling valve which passes the pressure gas to the pneumatic component (such as an air bag that is inflatable and deflatable for cabin levelling). Thus, the cabin levelling valve provides ease of assembly, as it allows both an inflation and a deflation of the pneumatic component to be performed. The provision of a control member having various positions to control valve operation allows the valve to be controlled via a mechanical linkage, which is responsive to a change in cabin tilt and/or cabin height.

The control member may have a third position, which is also referred to as a neutral position. The cabin levelling valve may be configured such that no pressure gas is supplied to the pneumatic component and no gas is exhausted from the pneumatic component via the cabin levelling valve when the control member is in the third position.

This configuration provides the effect that the cabin levelling valve may also be used to perform the operation of maintaining a desired amount of gas in the pneumatic component and preventing an exhaust operation when the control member is in the third position.

The cabin levelling valve may comprise an integrated gas release assembly in a shell defined by the body and the cover. The integrated gas release assembly may be configured to perform a controllable check valve function to selectively allow gas to flow from the pneumatic component to an inner cavity defined between the body and the cover. From the inner cavity, the gas is exhausted through the at least one exhaust port for deflating the at least one pneumatic component. The integrated gas release assembly may be in a normally closed position when the control member is in the third position (i.e., the neutral position) and when the control member is in the first position (i.e., the position for inflation of the pneumatic component). The integrated gas release assembly may be controlled to selectively allow gas to flow from the pneumatic component for being exhausted via the exhaust port when the control member is in the second position (i.e., the position for the deflation of the pneumatic component).

This configuration provides the effect that the cabin levelling valve may ensure that the amount of gas in the pneumatic component is maintained if the control member is in the third position.

The cabin levelling valve may be a 3-way valve. The cabin levelling valve may have three operating states, corresponding to inflation of the pneumatic component, deflation of the pneumatic component via the at least one exhaust port, and retaining an amount of gas in the pneumatic component. The cabin levelling valve may be a 3/3-way valve. The cabin levelling valve may be configured in such a way that a position of the control member controls in which of the three operating states the cabin levelling valve is operated.

This configuration provides the effect that the cabin levelling valve is operative to perform, in a controllable manner, inflation of the pneumatic component, deflation of the pneumatic component, and maintaining the gas amount in the pneumatic component constant.

The gasket may be dimensioned to abut on the body and the cover in a close-fitting manner.

This configuration provides the effect that the risk of ingress of liquid and/or particulate matter into the cabin levelling valve is reduced. This increases cabin levelling valve life.

The cover may comprise a recess in which the gasket is arranged.

This configuration provides the effect that a seal comprising a labyrinth-type structure may be provided by the body, cover, and gasket which further reduces the risk of ingress of liquid and/or particulate matter into the cabin levelling valve. This increases cabin levelling valve life.

The body may comprise a raised portion extending into the recess, wherein the gasket is sandwiched between the raised portion and a surface portion of the cover delimiting the recess.

This configuration provides the effect that a seal comprising a labyrinth-type structure may be provided by the body, cover, and gasket which further reduces the risk of ingress of liquid and/or particulate matter into the cabin levelling valve. This increases cabin levelling valve life.

The raised portion may comprise a ridge having a top surface, wherein the gasket abuts on the top surface of the ridge.

This configuration provides the effect that reliable assembly of the gasket between the body and the cover is facilitated. The resultant reduction in liquid and/or particulate matter ingress extends the cabin levelling valve life.

The body and the cover may be dimensioned such that, in the cabin levelling valve, the raised portion is spaced from the cover by a gap, wherein the gasket is arranged in the gap.

This configuration provides the effect that the gasket operates as a plug which closes the gap between the body and the cover. A seal may be attained by means of the gasket, which may yield when the cover and/or body exert forces on the gasket. Thereby, the risk of ingress of liquid and/or particulate matter is reduced further. Moreover, greater versatility is available for choosing the material of the body and/or the cover, as the desired seal is attained by the gasket.

The gasket may comprise passages for at least one fastener that fastens the cover to the body, and/or for at least one tubular section of the body or of the cover.

This configuration provides the effect that the gasket can be more reliably retained in its position while providing a circumferential seal around the fastener and/or the at least one tubular section.

The gasket may be configured to reduce or prevent liquid ingress into the cabin levelling valve.

This configuration provides the effect that not only the likelihood of particulate matter ingress but also of liquid(s) entering into the cabin levelling valve is reduced. This is particularly important for commercial vehicles, in particular traction vehicles and/or lorries, where there may be a high risk of spray water, mud, or dirt entering a conventional cabin levelling valve.

The gasket may extend from a first free end of the gasket to a second free end of the gasket. The first free end of the gasket and the second free end of the gasket may be arranged at, and optionally engaged with a rubber boot of the cabin levelling valve, wherein the rubber boot extends around part of the control member to provide protection for the control member.

This configuration provides the effect that improved protection against ingress of foreign material into the cabin levelling valve is attained. This further extends the life of the cabin levelling valve.

The gasket may extend in a U- or V-shape (as seen in a plan view along a viewing direction perpendicular to a major face of the gasket) between the first end and the second end, having a curved apical portion arranged opposite both the first end and the second end.

This configuration provides the effect that protection against ingress of foreign material into the cabin levelling valve is attained along a U- or V-shaped raised portion of the body and/or recess of the cover.

The at least one exhaust port may be provided in one of the body and the cover at a location spaced from the other of the body and the cover.

This configuration provides the effect that the exhaust port is arranged spaced from the interface of the body and the cover, allow better protection against ingress of liquids and/or particulate matter to be provided at the interface of the body and the cover.

The cabin levelling valve may have a first major surface and a second major surface. The first major surface may be arranged on the body. The second major surface may be arranged on the cover. Fasteners that affix the cover to the body may extend along a direction transverse, in particular perpendicular, to the first major surface and the second major surface. The through opening or several through openings of the exhaust port may be formed in the second major surface.

This configuration provides the effect that the sealing member can be easily and reliably mounted, thereby contributing to extended cabin levelling valve life.

The control member may comprise a control lever.

This configuration provides the effect of facilitating operation of the cabin levelling valve responsive to a change in attitude or height of the cabin by means of a linkage connected to the cabin and the control lever.

The cabin levelling valve may comprise a protection member (such as a rubber boot) engaged with the body and with the cover, wherein the control lever extends through at least part of the protection member.

This configuration provides the effect of protecting the control lever, thereby further enhancing cabin levelling valve life.

The protection member may comprise a rubber boot, wherein the control lever extends through at least part of the rubber boot.

This configuration provides the effect of allowing a desired movement of the control lever while protecting the control lever, thereby further enhancing cabin levelling valve life.

The cabin levelling valve may further comprise a first connector mounted on or integral with the supply port and a second connector mounted on or integral with the discharge port.

This configuration provides the effect of facilitating the installation of the first fluid line (in particular a first gas line) that provides fluid communication between a pressure gas source and the cabin levelling valve, and of a second fluid line (in particular a second gas line) that provides fluid communication between the pneumatic component and the cabin levelling valve

The first connector and/or the second connector may be a quick release connector.

This configuration provides the effect of facilitating the installation of the first fluid line and of the second fluid line.

The body may comprise or may be made of a plastic material.

This configuration provides the effect of facilitating formation of the through hole(s) of the exhaust port(s) in the body, and, where applicable, the formation of a mounting structure of the body for securing the sealing member proximate to, e.g. overlapping with, the through hole(s).

The supply port, the discharge port, and the exhaust port may all be arranged on the body.

This configuration provides ease of manufacture.

The exhaust port may have an ingress protection class of at least IP5K7K according to ISO 20653, such as an ingress protection class of IP5K9K according to ISO 20653.

Thereby, good protection against foreign material ingress is provided. In particular, the risk of cleaning agents entering the cabin levelling valve through the exhaust port is reduced significantly or eliminated. Cabin levelling valve life is extended thereby.

The cabin levelling valve may have an ingress protection class of at least IP5K7K according to ISO 20653, such as an ingress protection class of IP5K9K according to ISO 20653.

Thereby, good protection against foreign material ingress is provided. In particular, the risk of cleaning agents entering the cabin levelling valve is reduced significantly or eliminated. Cabin levelling valve life is extended thereby.

According to another aspect of the invention, there is provided a cabin levelling system. The cabin levelling system comprises the cabin levelling valve of any aspect or embodiment disclosed herein, a pressure gas source configured to supply pressure gas to the supply port, at least one air bag configured to inflate in the first levelling operation and to deflate in the second levelling operation, and a linkage connected to the control member. The linkage is configured to displace the control member from a neutral position to either the first position or the second position responsive to a change in load acting on a cabin of a vehicle.

This configuration provides the effect of implementing a cabin levelling system having a cabin levelling valve that has enhanced protection against ingress of liquids and/or particulate matter, thereby enhancing the life of the cabin levelling valve. A cabin levelling system with enhanced life is thereby provided.

According to another aspect of the invention, there is provided a commercial vehicle. The commercial vehicle comprises a cabin and the cabin levelling valve or cabin levelling system of any aspect or embodiment disclosed herein.

This configuration provides the effect of implementing a commercial vehicle having a cabin levelling valve that has enhanced protection against ingress of liquids and/or particulate matter, thereby enhancing the life of the cabin levelling valve. Maintenance and/or replacement work for the cabin levelling valve is thereby reduced.

The at least one air bag may be configured such that inflation of the at least one air bag causes a part of the cabin to raise and deflation of at least one air bag causes the part of the cabin to be lowered.

This configuration provides the effect of implementing a commercial vehicle having a cabin levelling valve that has enhanced protection against ingress of liquids and/or particulate matter, thereby enhancing the life of the cabin levelling valve. Maintenance and/or replacement work for the cabin levelling valve is thereby reduced.

The linkage and the control member may be configured such that the change in load acting on the cabin causes the linkage to displace the control member to either the first position or the second position.

This configuration provides the effect that cabin levelling is performed automatically, based on a mechanical operation input received by the cabin levelling valve. The attitude of the cabin may be adjusted by means of the cabin levelling valve supplying gas to the pneumatic component (such as an air bag) or allowing gas to be exhausted from the pneumatic component via the cabin levelling valve.

The commercial vehicle may be an air-sprung vehicle.

The pneumatic cabin levelling is particularly useful with an air-sprung vehicle, without being limited thereto.

According to another aspect of the invention, there is provided a method of assembling the cabin levelling valve according to an aspect or embodiment of the invention. The method comprises assembling the body and the cover and mounting the sealing member to the body or the cover, comprising securing the sealing member by means of the mounting member that is pushed into engagement with the body or the cover to clamp the sealing member between the mounting member and the body or the cover.

The method provides the effect of providing a cabin levelling valve that reduces the risk of liquid and/or particulate matter entering the cabin levelling valve. Thus, the method provides a cabin levelling valve with enhanced life.

The method may further comprise assembling the cabin levelling valve in a cabin levelling system, comprising establishing a pneumatic connection between a pressure gas source and a establishing a further pneumatic connection between the discharge port of the cabin levelling valve and a pneumatic component (such as an air bag) that is inflatable and deflatable for cabin levelling.

Thereby, a cabin levelling system is provided having a cabin levelling valve that reduces the risk of liquid and/or particulate matter entering the cabin levelling valve. Thus, the method provides a cabin levelling valve with enhanced life.

The method may further comprise assembling the cabin levelling valve in a commercial vehicle, comprising establishing a pneumatic connection between a pressure gas source and a establishing a further pneumatic connection between the discharge port of the cabin levelling valve and a pneumatic component (such as an air bag) that is inflatable and deflatable for cabin levelling, and further comprising connecting the control member of the cabin levelling valve to a linkage that is displaced responsive to a change in attitude of a cabin of the commercial vehicle.

Thereby, a commercial vehicle is provided having a cabin levelling valve that reduces the risk of liquid and/or particulate matter entering the cabin levelling valve. Thus, the method provides a cabin levelling valve with enhanced life.

According to another aspect of the invention, there is provided a use of the cabin levelling valve of any aspect or embodiment to reduce or prevent liquid and/or particulate matter ingress into the cabin levelling valve through the exhaust port of the cabin levelling valve during operation of a commercial vehicle comprising the cabin levelling valve.

Thereby, the cabin levelling valve may be used to reduce maintenance and/or repair work that might otherwise be required more frequently when installing a conventional cabin levelling valve.

Various effects and advantages are attained by embodiments of the invention. For illustration, the cabin levelling valve provides protection against ingress of foreign materials through the exhaust port, thereby contributing to increased cabin levelling valve life. The cabin levelling valve is configured in such a manner that the sealing member is mounted efficiently, e.g., by being clamped to the body or the cover by means of a clamping ring or other mounting member.

Further advantages and embodiments and developments are defined in the dependent claims. These and other aspects of the invention will be apparent from and elucidated with reference to the embodiments described hereafter with reference to the accompanying drawings, in which:
- Fig. 1: is a partially exploded perspective view of a cabin levelling valve according to an embodiment of the invention;
- Fig. 2: is a plan view of the cabin levelling valve showing an exhaust port;
- Fig. 3: is another partially exploded perspective view of the cabin levelling valve;
- Fig. 4: is a partial plan view of the cabin levelling valve with a cover removed therefrom;
- Fig. 5: is a partial exploded view of components of the cabin levelling valve;
- Fig. 6: is a cross-sectional view of the cabin levelling valve;
- Fig. 7: shows a detail of the cross-sectional view of the cabin levelling valve;
- Fig. 8: shows the cabin levelling valve connected to a linkage;
- Fig. 9: is a partial view of a vehicle comprising a cabin levelling system that comprises the cabin levelling valve; and
- Fig. 10: is a schematic view of a commercial vehicle comprising the cabin levelling valve.

Embodiments of the invention will be described with reference to the drawings. In the drawings, similar or identical reference signs designate elements with similar or identical configuration and/or function.

The invention relates to a cabin levelling valve that is configured to selectively establish fluid communication of a pneumatic component (such as an air bag) with a pressure gas source for inflation of the pneumatic component and with ambient atmosphere via an exhaust port for deflation of the pneumatic component.

As used herein, the term "cabin levelling" refers to a mechanism configured to change an attitude of a cabin of a commercial vehicle, such as a traction vehicle or a lorry or truck. The change in attitude can be a change in attitude relative to a surface on which the vehicle stands.

As used herein, the term "inflation" encompasses a partial inflation, i.e., an increase in the amount of gas in the pneumatic component. The term "deflation" encompasses a partial deflation, i.e., a decrease in the amount of gas in the pneumatic component.

As used herein, the term "sealing member" refers to an element that at least reduces an ingress of liquid and/or particulate foreign material into a cabin levelling valve through an exhaust port of the cabin levelling valve. The sealing member does not provide a gas-tight seal but can implement a one-way gas valve functionality that selectively opens responsive to a pressure differential during an exhaust operation.

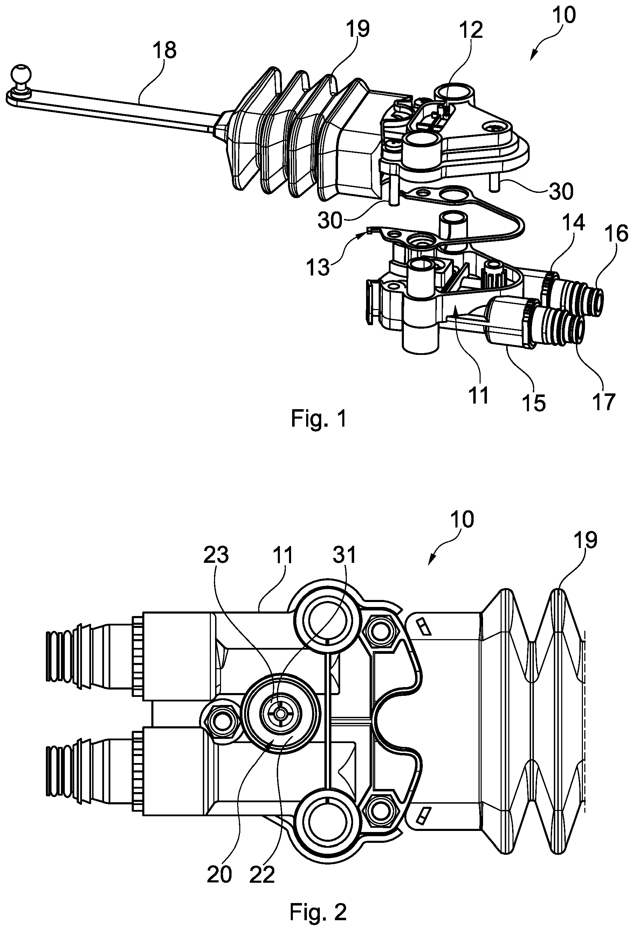

Fig. 1 is a partially exploded view of a cabin levelling valve 10 according to an embodiment of the invention. The cabin levelling valve 10 may be configured as a 3-way valve comprising three ports and having three operation states, without being limited thereto.

Cabin levelling valves improve driver comfort by maintaining a consistent cabin position. For cabins fitted with an air suspension system, the cabin levelling valve 10 may preserve a correct attitude, adapting to cabin load and a range of road conditions.

The cabin levelling valve 10 comprises a body 11 and a cover 12 attached to the body by means of fasteners 30. In the assembled state of the cabin levelling valve 10, the body 11 and the cover 12 define an outer shell of a portion of the cabin levelling valve 10. Both the body 11 and the cover 12 comprise surfaces which are exposed when the cabin levelling valve 10 is assembled.

The cabin levelling valve 10 comprises a supply port 14. A first connector 16 may be provided on the supply port 14. When installed in a cabin levelling system or a vehicle, the supply port 14 of the cabin levelling valve 10 is in fluid communication with a pressure gas source. The first connector 16 may be a quick release connector for ease of assembly.

The cabin levelling valve 10 comprises a discharge port 15. A second connector 17 may be provided on the discharge port 15. When installed in a cabin levelling system or a vehicle, the discharge port 15 of the cabin levelling valve 10 is in fluid communication with a pneumatic component (such as an air bag) configured to act on and change the attitude of a cabin. The second connector 17 may be a quick release connector for ease of assembly.

The cabin levelling valve 10 comprises a control member which may comprise a control lever 18. The control lever 18 may comprise a coupling structure for coupling to a lever, such as a pin of a pivot connection configured for implementing a pivot connection with the lever. A rubber boot 19 of the cabin levelling valve 10 may engage with both the body 11 and the cover 12. The rubber boot 19 may extend at least partially around the control lever 18 to protect the control lever 18 while allowing movement between various control positions, such as first, second, and third positions which will be described in more detail below.

Fig. 2 shows a plan view of the cabin levelling valve 10, with a direction of view directed at a first major surface of the cabin levelling valve provided by the body 11. The cabin levelling valve comprises an exhaust port 20 at the body 11. The exhaust port 20 comprises a sealing member 22 which is arranged to overlap one or several through holes formed through a body wall of the body 11. The sealing member 22 is held in place on a mounting post 31 of the body 11 by means of a mounting member 23. The sealing member 22 overlaps the through hole(s) formed through the body wall of the body 11 while allowing gas to pass from an interior cavity of the cabin levelling valve 10 to ambient atmosphere.

The cabin levelling valve 10 may be configured as a 3/3-way valve, having three ports (the supply port 14, the discharge port 15, and the exhaust port 20) and three operation states. The cabin levelling valve 10 may be configured such that, when the control lever 18 is in a first position (which may also be referred to as an inflation position), a fluid communication is established between the supply port 14 and the discharge port 15. In this operation state, the cabin levelling valve 10 is configured to pass pressure gas received at the supply port 14 from a pressure gas source to the discharge port 15 for inflating the pneumatic member. The cabin levelling valve 10 may be configured such that, when the control lever 18 is in a second position (which may also be referred to as a deflation or exhaust position), a fluid communication is established between the discharge port 15 and an inner cavity defined between the cover 12 and the body 11 to thereby fluidly communicate the discharge port 15 with the exhaust port 20. In this operation state, the cabin levelling valve 10 is configured to pass gas received at the discharge port 15 via the exhaust port 20 to ambient atmosphere. The cabin levelling valve 10 may be configured such that, when the control lever 18 is in a third position (which may also be referred to as neutral position), the cabin levelling valve 10 shuts off the discharge port 15 from the exhaust port 20 and the supply port 14. In this operation state, the cabin levelling valve 10 is configured to ensure that the amount of gas in the pneumatic member does not change via the cabin levelling valve 10.

Preferably, the cabin levelling valve 10 is configured such that the third position is an intermediate position between the first position and the second position of the control lever. This facilitates control of the cabin levelling valve 10 via a mechanical linkage which acts as input to the control lever 18.

It will be appreciated that various configurations may be used to implement the desired fluidic configuration of the cabin levelling valve 10. For illustration, the cabin levelling valve may be a slider valve, such as a ceramic slider valve, with movement of the control member 18 selectively opening and closing flow paths (e.g., by displacement of a slider which may be made from a ceramic material). A slidable component having gas flow passages formed therein may be biased into a position (e.g., by a spring such as a coil spring) in which the discharge port 15 is not in fluid communication with either the supply port 14 and the exhaust port 20. Other implementations are possible. For illustration rather than limitation, the cabin levelling valve 10 may comprise a normally closed first control valve (e.g., a 2/2-way valve) between the discharge port 15 and the supply port 14 which is selectively opened when the control lever 18 is in the first position. The cabin levelling valve 10 may comprise a normally closed second control valve (e.g., a 2/2-way valve) between the discharge port 15 and the exhaust port 20, which is selectively opened when the control lever 18 is in the second position. Still other configurations may be used to implement the pneumatic function.

To reduce the risk of ingress of liquid and/or particulate matter into the cabin levelling valve 10, the cabin levelling valve 10 comprises a gasket 13. The gasket 13 is interposed between and abuts on the cover 12 and the body 11 in a close-fitting manner. The gasket 13 may have a height that is selected in accordance with, and slightly larger than, a gap between the cover 12 and the body 11 so that the gasket 13 can efficiently plug the gap between the cover 12 and the body 11. The gasket 13 may extend along a region in which the cover 12 and the body 11 are proximate to each other but spaced by a gap.

The cabin levelling valve 10 provides enhanced resistance against ingress of liquid and/or particulate matter, such as mud, dirt, or spray water. The gasket 13 reduces the risk of ingress along the interface of the body 11 and the cover 12. The sealing member 22 reduces the risk of ingress into the cabin levelling valve 10 at the exhaust port 20. The rubber boot 19 attaches to and preferably extends circumferentially along the ends of the cover 12 and of the body 11 that are arranged opposite the supply port 14, and which are proximate to the control lever 18. Thus, the risk of ingress of mud, dirt, liquids, or other undesirable foreign materials into the cabin levelling valve 10 is reduced by the construction of the cabin levelling valve 10.

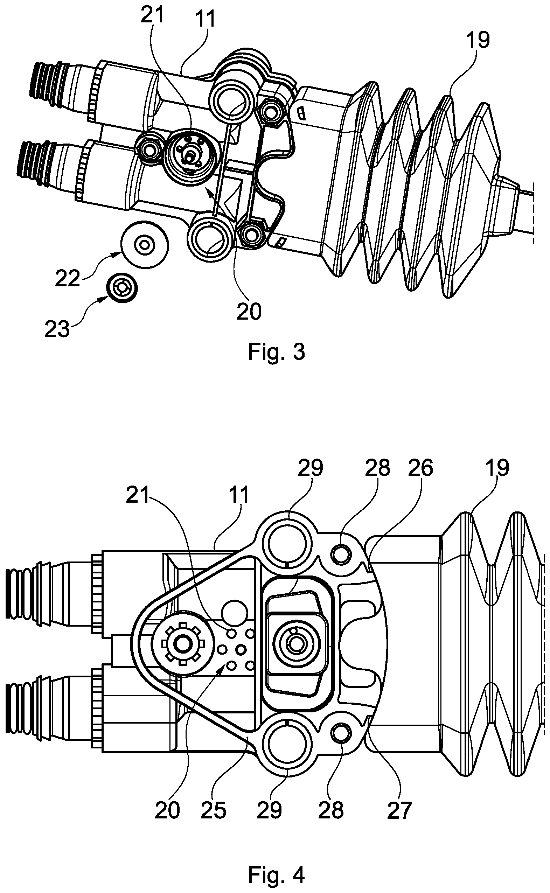

As will be explained in more detail below with reference to Figures 3, 4, and 6, the exhaust port 20 of the cabin levelling valve 10 is also configured in such a manner that the risk of particulate and/or liquid ingress through the exhaust port 20 into the cabin levelling valve 10 is reduced.

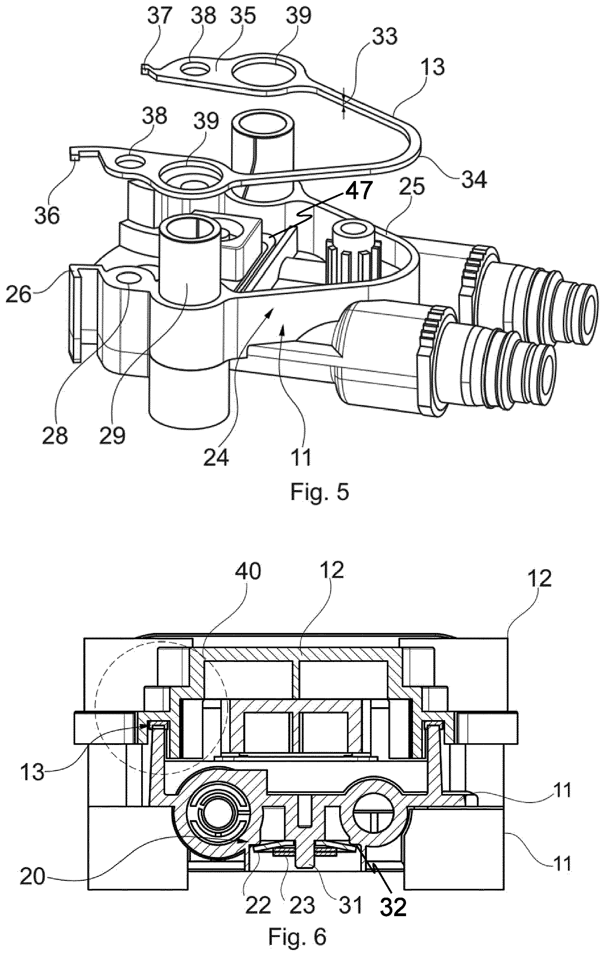

Fig. 3 shows a partial exploded view of the cabin levelling valve 10. The sealing member 22 may have a disc shape. The central aperture of the sealing member 22 may be sized to allow passage of the mounting post 31 of the body 11. The sealing member 22 may be resiliently deformable. When mounted to the mounting post 31 by the mounting member 23, the sealing member 22 may be deformed so as to be biased against an abutment rim 32 of the body 11 (shown in Fig. 6). The mounting member 23 may be a clamping ring that clamps the sealing member 22 between the mounting member 23 and the body 11. The mounting member 23 may have an opening matched to an outer diameter of the mounting post 31 so that the mounting member 23 is securely fixed to the mounting post 31 by means of, e.g., a friction fit.

The exhaust port 20 comprises the one or several through holes 21 formed through the body wall of the body 11 at the major surface facing towards the viewed in Fig. 3. The exhaust port 20 may comprise several through holes 21 arranged along a circle, ellipse, circular arc, or elliptical arc. Thereby, the total area through which gas can be exhausted is increased while facilitating reliable prevention of foreign material ingress into the cabin levelling valve 10 through the through holes 21, using the disc-shaped sealing member 22. The housing sections between the through holes 21 are efficient to reduce inward deflection of the sealing member 22.

To further reduce the risk of liquid and/or particulate matter ingress into the cabin levelling valve, the body 11 may comprise a cylindrical wall projecting outwardly, i.e., in a direction away from the cover 12. The cylindrical wall defines an accommodation section in which the sealing member 22 and mounting member 23 are arranged. The through holes 21 are arranged in the outer surface of the body 11 which defines the closed end of the cylindrical wall (best seen in Figs. 3 and 6). The sealing member 22 and the mounting member 23 are both arranged within the cylindrical wall. This configuration protects the sealing member 22 and the mounting member 23. Furthermore, a significant part of foreign materials (such as mud, spray water, or dust) that impinges onto the body in a direction transverse to an axial direction of the mounting post 31 is deflected and kept away from the sealing member 22 by the cylindrical wall.

A ceramic 47 may be arranged on, e.g. fixed to, the body 11 so as to be positioned in the interior of the volume defined by the body 11 and the cover 12.

Fig. 4 shows a plan view of the cabin levelling valve 10 when the cover 12 is removed. The through holes 21 may extend cylindrically from an inner surface of the body wall (with the inner surface facing towards the cover 11) to an outer surface of the body wall (which is the exposed surface facing towards the viewer in Fig. 3). Fig. 5 shows a partial exploded view of the cabin levelling valve 10, in which the body 11 and the gasket 13 are shown on an enlarged scale for greater clarity.

The body 11 comprises a raised portion 24 that projects from a base of the body 11 in which the through holes 21 are formed. The raised portion 24 may be rim-shaped and may extend continuously from a first free end 26 to a second free end 27. The first and second free ends 26, 27 of the raised portion may be proximate the rubber boot 19. The raised portion 24 may comprise a top surface 25 that extends substantially in a plane and that may be substantially flat (with the optional exception of projecting tube portions 28). The gasket 13 may have a sheet configuration extending parallel to the plane in which the top surface 25 extends. A height 33 of the gasket 13 measured perpendicular to the plane in which the top surface 25 extends may be smaller than the diameter of the gasket 13 within that plane. The gasket 13 may extend continuously from a first free end 36 to a second free end 37. The first free end 36 is arranged proximate the first free end 26 of the raised portion 24. The second free end 37 is arranged proximate the second free end 27 of the raised portion 24.

The body 11 comprises body passages 28 for fasteners and tubular sections 29. Corresponding passages for fasteners and tubular sections are provided on the cover (not shown). The gasket 13 may have corresponding passages 38 for the fasteners which have an inner diameter matched to that of the passages 28 of the body 11. The gasket 13 may have corresponding passages 39 for the tubular sections 29 which have an inner diameter matched to an outer diameter of the tubular sections 29 of the body 11.

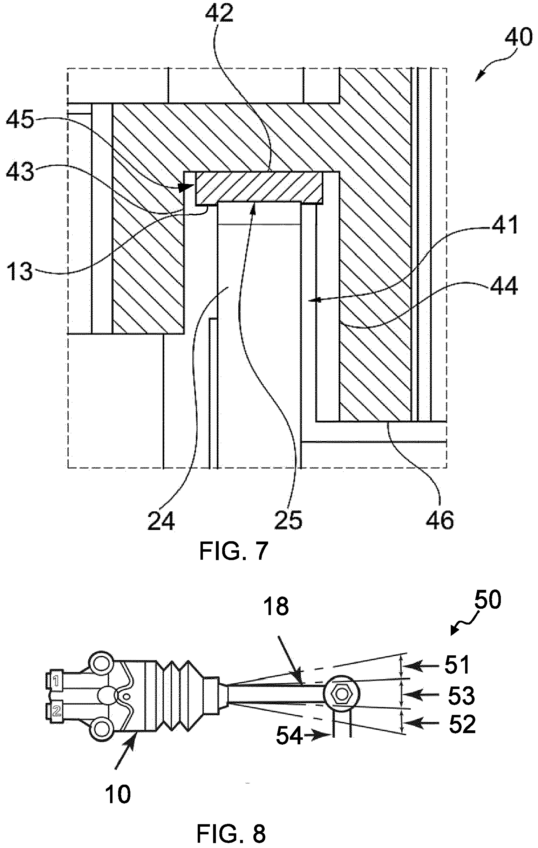

A first face 34 and a second face 35 of the gasket 13 may extend substantially parallel to each other. The first face 34 abuts on the top surface 25 of the raised portion 24 of the body 11, optionally in a close-fitting manner. The second face 35 abuts on a surface portion of the cover 12 which delimits a recess (Figs. 6 and 7).

Fig. 6 shows a cross-sectional view of the cabin levelling valve 11. Fig. 7 shows a detail 40 of the cross-sectional view on an enlarged scale. The cover 12 comprises a recess 41 into which the raised portion 24 projects. The cover 12 and body 11 are shaped in such a way that, when a contact surface 46 of the cover 12 abuts on the ceramic 47 arranged in the body 11, the top surface 25 of the raised portion remains spaced from the cover 11 by a gap 45. The recess includes side wall surfaces 43, 44 and a surface portion 42 that delimits the recess and faces the top surface 25. The surface portion 42 may extend along the top surface 25 and parallel to the top surface 25. The gasket 13 is sandwiched between and abuts on the top surface 25 and the surface portion 42 in a close-fitting manner. Thus, the gasket 13 is effective in reducing the risk of ingress of foreign materials into the cabin levelling valve. The labyrinth-type structure formed by the recess 41 and raised portion 24 further contributes to reducing the risk of ingress of foreign materials such as mud, dirt, or spray water.

Fig. 8 shows a partial view of a cabin levelling system 50 comprising the cabin levelling valve 10 and a linkage 54. When loads cause a cabin attitude to change, the linkage 54 displaces the control lever 18 from a neutral position 53 to a first position 51 (for inflation of an air bag) or a second position 52 (for deflation of an air bag), depending on whether a portion of the cabin is to be raised or lowered by the respective air bag.

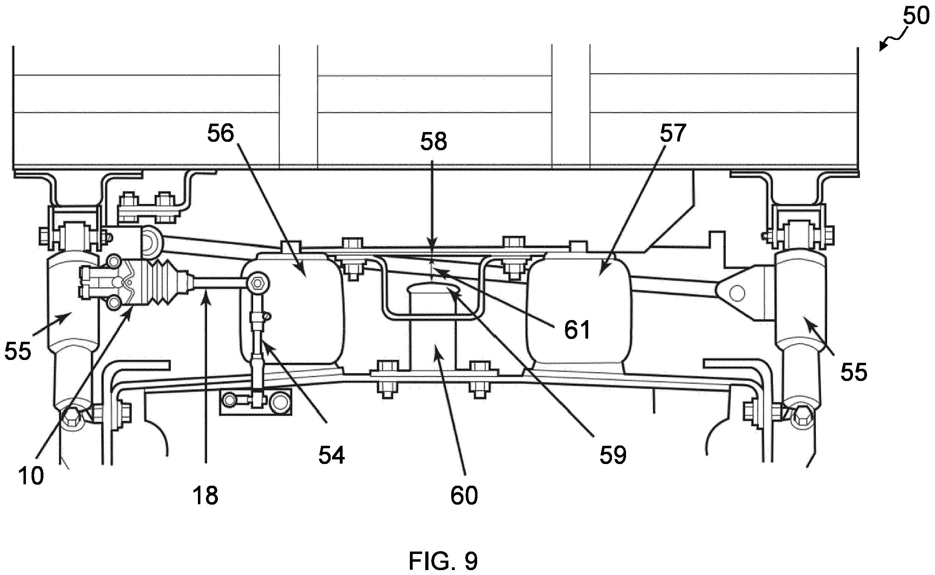

Fig. 9 shows a schematic view of a cabin levelling system installed in a commercial vehicle. The cabin levelling system comprises the cabin levelling valve 10, a pressure gas source (not visible in Fig. 9) configured to supply pressure gas to the supply port, at least one air bag 56 configured to inflate when the control lever 18 is in the first position 51 and to deflate when the control lever 18 is in the second position 52, and a linkage 54 connected to the control member. The linkage 54 may be arranged to extend vertically when the commercial vehicle stands on a horizontal surface. The linkage 54 is configured to displace the control lever 18 from the neutral position 53 to either the first position 51 or the second position 52 responsive to a change in load acting on a cabin of the commercial vehicle.

The commercial vehicle may comprise shock absorbers 55, a further airbag 57 and optionally an associated further cabin levelling valve, and other components. For illustration, movement of the cabin may be delimited by an upper stop 58, a rubber cap 59, and a lower stop 60, with the upper stop 58 being spaced from the rubber cap 59 by a spacing 61 in at least some operation states.

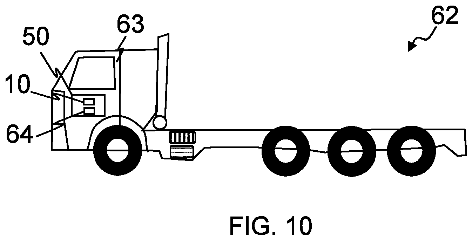

Fig. 10 is a schematic view of a commercial vehicle 62. The commercial vehicle 62 may be a traction vehicle or a lorry, for example. The commercial vehicle 62 comprises a cabin levelling system 50 comprising the cabin levelling valve 10 and a pressure source 64 in fluid communication with the supply port 14.

When the attitude of a cabin 63 needs to be readjusted, the cabin levelling valve 10 is mechanically controlled, by the load acting on a part of the cabin 63. Responsive to the mechanical input, the cabin levelling valve 10 causes a levelling action to be performed by causing a pneumatic member (e.g., an air bag) to inflate or deflate, to thereby adjust the attitude of the cabin 63.

While embodiments have been described with reference to the drawings, modifications and alterations may be implemented in other embodiments.

For illustration, while embodiments have been described in which the cabin levelling valve has a supply port, discharge port, and exhaust port that are all formed on the body, one or several of the ports may additionally or alternatively be formed on the cover. For further illustration, while embodiments have been described in which the exhaust port comprises several through holes in the body or the cover, the exhaust port may comprise only one through hole or may comprise through holes both in the body and in the cover. For further illustration, while embodiments have been described in which the exhaust port comprises a disc-shaped sealing member, other configurations may be used to reduce the risk of foreign material ingress into the cabin levelling valve at the exhaust port. For further illustration, while embodiments have been described in which the sealing member is attached in overlapping relationship with the through hole(s) using a mounting post and clamping ring, other mounting techniques may be used. For illustration, the clamping ring does not need to be fixed to the mounting post by means of a friction fit. For further illustration, while embodiments have been described in which the cabin levelling valve is a 3/3-way valve, other valve configurations may be used.

For further illustration, the invention may be applied to a variety of cabin levelling valve configurations, including cabin levelling valves which are slider valves.

Various effects and advantages are attained by embodiments of the invention. Embodiments provide an enhanced cabin levelling valve which reduces the risk of foreign material ingress into the cabin levelling valve. The exhaust port may comprise a sealing member which is configured to be installed efficiently in overlapping relationship with one or several through opening(s) of the exhaust port, to reduce the risk of foreign material ingress into the cabin levelling valve. Thus, the cabin levelling valve provides enhanced mud protection and, thus, enhanced life.

### List of Reference Numerals (part of the description)

- 10: cabin levelling valve
- 11: body
- 12: cover
- 13: gasket
- 14: supply port
- 15: discharge port
- 16, 17: connector
- 18: control lever
- 19: rubber boot
- 20: exhaust port
- 21: through opening(s)
- 22: sealing member
- 23: mounting member
- 24: raised portion
- 25: top surface
- 26, 27: free ends of raised portion
- 28: fastener passage
- 29: tubular passage
- 30: fastener
- 31: mounting post
- 33: gasket height
- 34: first gasket surface
- 35: second gasket surface
- 36, 37: free ends of gasket
- 38: gasket passage
- 39: gasket passage
- 40: detail
- 41: recess
- 42: cover surface portion delimiting recess
- 43, 44: side wall surfaces
- 45: gap
- 46: cover contact surface
- 47: ceramic
- 50: cabin levelling system
- 51: first position
- 52: second position
- 53: neutral position
- 54: linkage
- 55: shock absorber
- 56, 57: air bag
- 58: upper stop
- 59: rubber cap
- 60: lower stop
- 61: spacing
- 62: commercial vehicle
- 63: cabin
- 64: pressure source

## Claims

1. A cabin levelling valve (10), comprising:
a control member (18);
a body (11);
a cover (12) attached to the body (11);
a gasket (13) mounted between the body (11) and the cover (12);
a supply port (14);
a discharge port (15); and
at least one exhaust port (20);
wherein the at least one exhaust port (20) comprises a sealing member (22) configured to reduce or prevent ingress of foreign material into the cabin levelling valve (10), wherein the at least one exhaust port (20) further comprises a mounting member (23) affixed to the body (11) or the cover (12) to secure the sealing member (22) to the body (11) or the cover (12),
wherein the cabin levelling valve (10) is configured to
pass pressure gas received at the supply port (14) to the discharge port (15) for inflation of a pneumatic component (56) to perform a first levelling operation when the control member (18) is in a first position (51), and
exhaust gas received from the pneumatic component (56) at the discharge port (15) through the at least one exhaust port (20) to perform a second levelling operation when the control member (18) is in a second position (52).

2. The cabin levelling valve of claim 1,
wherein the mounting member (23) is pushed into engagement with a mounting structure (31) of the body (11) or the cover (12) to clamp the sealing member (22) between the mounting member (23) and the body (11) or the cover (12).

3. The cabin levelling valve of claim 2,
wherein the mounting structure (31) comprises a mounting post (31), and wherein the mounting member (23) comprises an opening through which the mounting post (31) passes through the mounting member (23).

4. The cabin levelling valve of claim 3,
wherein the sealing member (22) comprises a central opening through which the mounting post (31) passes through the sealing member (22).

5. The cabin levelling valve of any one of the preceding claims,
wherein the mounting member (23) is engaged with the body (11) or the cover (12) by means of a friction fit.

6. The cabin levelling valve of any one of the preceding claims,
wherein the mounting member (23) comprises a clamping ring (23).

7. The cabin levelling valve of any one of the preceding claims,
wherein the at least one exhaust port (20) comprises several through openings (21) extending from an inner surface to an outer surface of the body (11) or the cover (12), wherein the several through openings (21) are in fluid communication with an inner cavity between the body (11) and the cover (12).

8. The cabin levelling valve of claim 7,
wherein the sealing member (22) is dimensioned to cover the several through openings (21) on the outer surface of the body (11) or the cover (12).

9. The cabin levelling valve of any one of the preceding claims,
wherein the sealing member (22) comprises a region biased against a circumferential rim (32) formed on the body (11) or the cover (12).

10. The cabin levelling valve of claim 9,
wherein the sealing member (22) has resilient return characteristics that bias the region of the sealing member (22) against the circumferential rim (32).

11. The cabin levelling valve of any one of the preceding claims,
wherein the body (11) or the cover (12) comprises a cylindrical section in which the sealing member (22) and the mounting member (23) are arranged.

12. The cabin levelling valve (10) of any one of the preceding claims, wherein the gasket (13) is dimensioned to abut on the body (11) and the cover (12) in a close-fitting manner, wherein the gasket (13) is arranged in a recess (41) of the cover (12) into which a raised portion (24) of the body (11) projects.

13. A cabin levelling system (50), comprising:
the cabin levelling valve (10) of any one of the preceding claims;
a pressure gas source (64) configured to supply pressure gas to the supply port (14);
at least one air bag (56) configured to inflate in the first levelling operation and to deflate in the second levelling operation; and
a linkage (54) connected to the control member (18) and configured to displace the control member (18) from a neutral position to either the first position or the second position responsive to a change in load acting on a cabin of a vehicle.

14. A commercial vehicle (62), comprising:
a cabin (63); and
the cabin levelling system (50) of claim 13,
wherein the at least one air bag (56) is configured such that inflation of the at least one air bag (56) causes a part of the cabin (63) to raise and deflation of at least one air bag (56) causes the part of the cabin (63) to be lowered.

15. A method of assembling the cabin levelling valve (10) of any one of claims 1 to 12, the method comprising:
assembling the body (11) and the cover (12);
mounting the sealing member (22) to the body (11) or the cover (12), comprising securing the sealing member (22) by means of the mounting member (23) that is pushed into engagement with the body (11) or the cover (12) to clamp the sealing member (22) between the mounting member (23) and the body (11) or the cover (12).

16. Use of the cabin levelling valve (10) of any one of claims 1 to 12 to reduce or prevent foreign material ingress into the cabin levelling valve (10) during operation of a commercial vehicle (62) comprising the cabin levelling valve (10).
